(19) Europäisches Patentamt
European Patent Office
Office européen des brevets

(11) EP 1 564 196 A1

(12) # DEMANDE DE BREVET EUROPEEN

(43) Date de publication:
**17.08.2005 Bulletin 2005/33**

(51) Int Cl.[7]: **C04B 35/106**, B02C 15/00

(21) Numéro de dépôt: **04447035.9**

(22) Date de dépôt: **10.02.2004**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(71) Demandeur: **MAGOTTEAUX INTERNATIONAL**
**B-4051 Vaux-Sous-Chevremont (BE)**

(72) Inventeurs:
- **Boulanger, Louis**
  **4845 Tiege (BE)**
- **Desiles, Stephane**
  **4031 Angleur (BE)**

(74) Mandataire: **Van Malderen, Michel et al**
**Office van Malderen**
**85/043 Boulevard de la Sauvenière**
**4000 Liège (BE)**

(54) **Billes de broyage et leur procédé de fabrication**

(57) La présente invention se rapporte à des billes de broyage en céramique frittée comprenant un composé de silicate d'alumine ($\alpha Al_2O_3.\beta SiO_2$) et en particulier de la mullite $3Al_2O_3.2SiO_2$ de la zircone ($ZrO_2$) et de l'alumine ($Al_2O_3$)

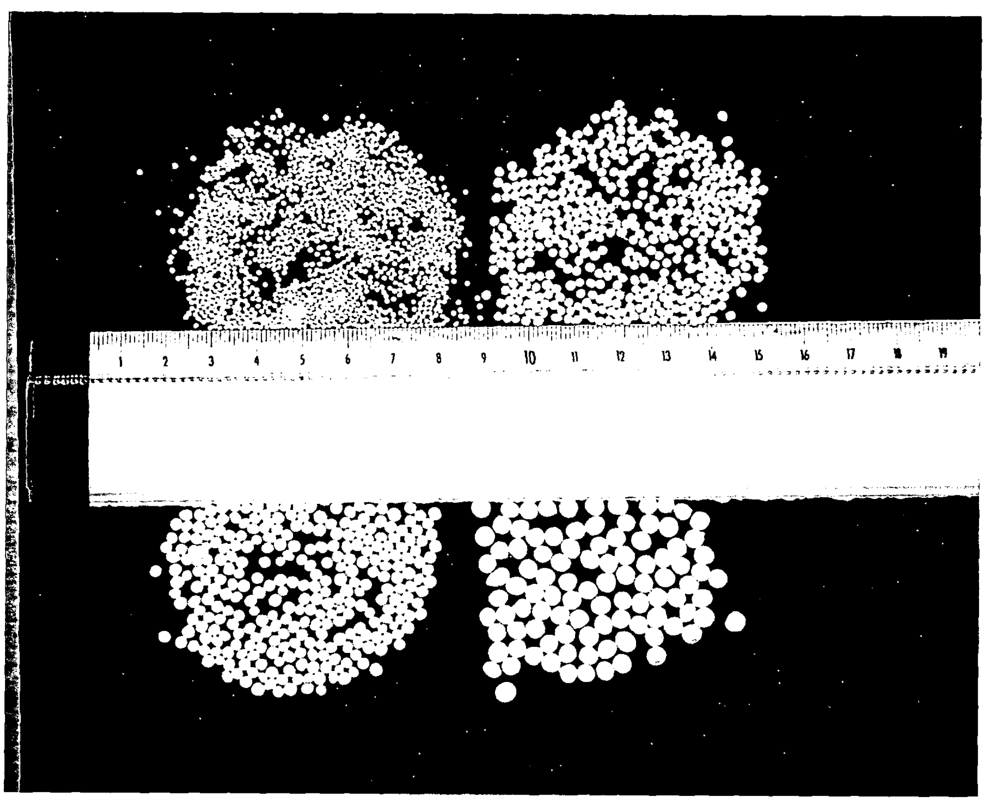


Fig.1



Printed by Jouve, 75001 PARIS (FR)

## Description

### Objet de l'invention

La présente invention se rapporte au domaine de broyage de matières minérales ou organiques et en particulier à des billes sphéroïdes en céramique frittée utilisées dans les broyeurs à agitation, du type attriteur ou autres, pour la réduction, dispersion et réactivation des particules dans un processus en voie sèche et/ou en voie humide.

### Etat de la technique et introduction

Les équipements et procédés de broyage fin et la dispersion en voie sèche et humide sont bien connus de l'homme de métier et développés dans des industries telles que :

- l'industrie minérale avec broyage fin des particules pré broyées par utilisation des procédés traditionnels,
- les industries de peinture, des encres, des laques, des composés agrochimiques ainsi que pour la dispersion et l'homogénéisation de liquides et de constituants solides variés.

Dans la plupart des cas, ces équipements et procédés utilisent des corps de dispersion ou de broyage de forme essentiellement sphérique et de petits diamètres (en général inférieur à 10mm).

Depuis peu, le broyage fin et ultra fin est devenu un pôle de développement essentiel dans les industries minières, avec la nécessité de s'approvisionner en corps broyants économiques.

Le broyeur à agitation peut être décrit de la manière suivante : il est composé d'une chambre cylindrique positionnée horizontalement ou verticalement contenant des petites billes de 0,5 à 12mm de diamètre en fonction des finesses souhaitées pour le produit fini. Dans cette chambre tourne un axe comportant des disques. Ces disques communiquent le mouvement à la charge broyante et à la matière à broyer. Le mouvement de l'ensemble permet la dispersion de la matière à broyer entre les billes de broyage qui ont pour rôle de réduire ladite matière jusqu'à une finesse prédéterminée. La granulométrie obtenue est alors fonction de l'énergie injectée dans la machine.

Ce procédé de broyage peut se faire en voie humide et en voie sèche de manière continue, avec alimentation et décharge de la matière à broyer, ou en batch, c'est-à-dire dans une chambre cylindrique complètement fermée.

Les corps broyants sont évidemment eux-mêmes soumis à l'usure et leur sélection dépendra des critères suivants:

- inertie chimique envers les produits broyés ou dispersés,
- résistance aux impacts mécaniques,
- résistance à l'usure,
- usure provoquée sur l'équipement interne du broyeur ou du disperseur,
- sa densité, une densité élevée conditionne un bon rendement de broyage,
- l'absence de porosité ouverte, entraînant l'usure rapide des billes à broyer,
- une sphéricité acceptable.

Sur le marché, on rencontre un nombre limité de corps utilisés dans les broyeurs à agitation ou dans les disperseurs :

- sable à grains arrondis (quartz, zircon),
- billes de verre,
- billes métalliques,
- billes en céramique fondue,
- billes en céramique frittée.

Le sable à grains arrondis est un produit naturel et bon marché. Sa faible résistance aux impacts mécaniques, sa densité faible, les variations dans sa qualité (inhomogénéité des gisements), son abrasivité envers les équipements internes des broyeurs à agitation et disperseurs constituent ses limitations dans les applications.

Les billes de verre, largement utilisées pour suppléer aux faiblesses du sable à grains arrondis, s'avèrent moins efficaces dans les applications de broyages ou dispersions demandant des billes à haute résistance mécanique et à haute résistance à l'usure. Leur densité faible de 2.5 est aussi une caractéristique qui limite leur utilisation lorsque l'efficacité de broyage est un élément important du processus.

Les billes métalliques s'avèrent moins efficaces pour les raisons suivantes :

- elles sont insuffisamment inertes chimiquement envers les produits broyés ou dispersés,
- leur densité excessivement élevée entraîne une consommation élevée d'énergie et un échauffement élevé des équipements internes des broyeurs/agitateurs.

Les billes en céramiques par contre ont une meilleure résistance mécanique que les billes de verre, une densité intermédiaire entre les billes de verre et les billes métalliques ainsi qu'une bonne inertie chimique envers les produits broyés ou dispersés.

Selon les procédés de fabrication, les billes en céramique sont classées en deux familles :

- les billes en céramique fondue, obtenues par fusion des composés céramiques à très haute température (+/- 2000°C) et solidifiées sous forme de gouttelettes,
- les billes en céramique frittées, obtenues par mise en forme à froid des composés céramiques et consolidation de ceux-ci par un frittage à haute température (+/- 1500°C) .

Suivant les composés céramiques mis en forme, les billes en céramique frittée sont classées en 4 familles :

- billes en alumine ( Teneur en $Al_2O_3 \geq 90\%$),
- billes en silicate d'alumine (mullite ou autres),
- billes an alumine-zircone (85 à 95% $Al_2O_3$ - 15 à 5% $ZrO_2$),
- billes en zircone stabilisée ou partiellement stabilisée à l'aide d'oxyde d'Yttrium, de Cérium ou de Magnésium entre autre.

Les compositions de mullite/zircone ainsi que de mullite/alumine/zircone ont généralement été étudiées dans le contexte des briques réfractaires pour l'utilisation des fours de verrerie.

G.Orange et F.Cambier étudient dans leur publication « high temperature mechanical properties of reaction-sintered mullite/zirconia and mullite/alumina/zirconia composites (Journal of Materials Science 20 (1985)2533-2540) la résistance à la rupture de tels composés ainsi que la résistance aux chocs à haute température (1000°C) pour l'utilisation de ces composés dans des applications structuelles telles que des fours de verrerie.

La problématique des billes de broyage est cependant très différente. Ces billes doivent être beaucoup plus lisses que les briques réfractaires dans la mesure où la simple présence d'angles sur les corps broyants, peuvent réduire de 50% la durée de vie des équipements internes des attriteurs ce qui conduit à des coûts de maintenance qui rendent impossible l'utilisation de corps broyants à rugosité élevée.

Le fini de surface des billes de broyage est donc très important car il influence directement l'usure interne de l'équipement et la qualité de broyage. Ledit fini de surface est aussi directement influencé par la composition chimique et du procédé de fabrication desdites billes.

Des billes de broyage en alumine et en zircone electrofondus sont respectivement divulguées dans les brevets américains US 3,486,706 et US 5,502,012. Ces documents revendiquent des phases vitreuses particulières.

La demande de brevet EP-0662461 A1 divulgue des billes en matière céramique formées par fusion d'un mélange de Zircone et de silice et étudie l'influence de la présence des oxydes d'Yttrium et de Cérium.

Le document EP 1167320 A1 présente des produits en alumine-zircone-silice fondus et coulés en blocs de coût réduit pour l'utilisation dans les régénérateurs de fours de verrerie ou dans les superstructures.

Toutes les billes de broyage comprenant de la silice, de l'alumine ou de la zircone ont comme point commun qu'elles ont été réalisées par fusion ce qui nécessite l'accès à des températures supérieures à 2000°C ce qui est techniquement difficile et donc coûteux. Par contre, aucun de ces documents ne divulgue des billes de broyage en céramique frittée, comprenant à la fois de la silice, de l'alumine et de la zircone. Ce procédé peut être réalisé à environ 1500°C ce qui est beaucoup plus facile sur le plan technologique et donc moins coûteux.

## Buts de l'invention

La présente invention vise à fournir des billes de broyage en céramique frittée d'une composition particulière avec une forte ténacité et une bonne résistance à l'usure à froid pour l'utilisation dans les broyeurs de matières minérales ou organiques. Elle vise en outre à fournir un procédé de fabrication de telles billes.

## Résumé et éléments caractéristiques de l'invention

La présente invention divulgue des billes de broyage en céramique frittée comprenant un composé de silicate d'alumine ($\alpha Al_2O_3.\beta SiO_2$), de la zircone ($ZrO_2 + HfO_2$ ) et de l'alumine ($Al_2O_3$).

De préférence céramique comprend en outre 1 à 5 % en poids d'oxydes sélectionnés parmi le groupe des $Na_2O$, MgO, CaO et BaO.
Par ailleurs, de préférence ledit composé de silicate d'alumine comprend la mullite ($3Al_2O_3.2SiO_2$).
De manière particulièrement avantageuse, ladite céramique comprend en outre un stabilisant sélectionné parmi les oxydes de terres rares.
L'invention présente par ailleurs des billes de broyage en céramique frittée réalisées à partir d'un mélange comprenant les ingrédients suivants (en % massique):

- 5 à 40% $ZrO_2$ + $HfO_2$,
- 0.1 à 10% $Y_2O_3$,
- 0.5 à 20% $SiO_2$,
- 40 à 90% $Al_2O_3$, avec un rapport $ZrO_2/SiO_2$ supérieur ou égal à 2

De préférence, les billes de broyage en céramique frittée sont réalisées à partir d'un mélange comprenant les ingrédients suivants (en % massique):

- 10 à 24% $ZrO_2$ + $HfO_2$,
- 0.5 à 3% $Y_2O_3$,
- 5 à 12% $SiO_2$,
- 60 à 85% $Al_2O_3$,

avec un rapport $ZrO_2/SiO_2$ supérieur ou égal à 2.
Toujours selon l'invention, les billes de broyage en céramique frittée sont obtenues par un procédé de frittage d'un mélange comprenant les ingrédients suivants (en % massique):

- 10 à 24% $ZrO_2$ + $HfO_2$,
- 0.5 à 3% $Y_2O_3$,
- 5 à 12% $SiO_2$,
- 60 à 85% $Al_2O_3$, avec un rapport $ZrO_2/SiO_2$ égal à 2.

Selon l'invention, les billes de broyage ont un diamètre entre 0.1 et 100mm, de préférence entre 0.5 et 50mm et de manière particulièrement préférée entre 0.5 et 10mm.
La présente invention divulgue en outre un procédé de fabrication de billes de broyage en céramique frittée comprenant les étapes suivantes :

- mélange et/ou broyage des matières premières en voie sèche et/ou humide pour constituer une barbotine avec ajouts éventuels de liants et/ou de surfactants organiques;
- passage de ladite barbotine par un moyen ou un procédé de granulation;
- sélection par tamisage des billes obtenues avec reconduction des billes de granulométrie inadéquate en amont via une étape de séchage et/ou de broyage éventuelle vers le mélangeur;
- séchage des billes de granulométrie adéquate ;
- frittage des billes de granulométrie adéquate entre 1400°C et 1600°C suivi d'une étape de conditionnement.

L'invention précise par ailleurs que les moyens de granulation comprennent des granulateurs à lit fluidisé et des disques de granulation.
Par ailleurs, les granulés peuvent également être obtenus par des procédés de gelification ou des procédés de moulage par injection.
L'invention précise également que lesdits liants organiques sont choisis parmi le groupe des polysaccharides, des polymères thermoplastiques, thermodurcissables ou à base de solvants aqueux ou organiques.
Avantageusement, lesdits surfactants sont choisis parmi le groupe des acides carboxyliques tels que l'acide stéarique ou l'acide oléique et/ou des polyélectrolytes tels que le polymethylacrilate d'ammonium.
Par ailleurs, l'invention divulgue l'utilisation des billes de broyage en céramique frittée pour le broyage de matières minérales ou organiques.

## Brève description des figures

La figure 1 représente une image des billes de la présente invention avec des granulométries différentes.

## Description détaillée de l'invention

L'invention concerne des billes en céramique frittée, composées d'alumine-zircone-silicate d'alumine et en particulier d'alumine-zircone-mullite. La qualité de ces billes est supérieure aux billes en alumine, en silicate d'alumine ou en alumine-zircone et leur coût est nettement inférieur aux billes en zircone, très coûteuses qui sont particulièrement utilisées comme corps de broyage et/ou de dispersion.

Plus précisément, l'invention concerne des billes en céramique frittée ayant la composition chimique suivante, en % massique :

- 5 à 40% $ZrO_2$ + $HfO_2$, de préférence entre 10 et 24 %,
- 0.1 à 10% $Y_2O_3$, de préférence entre 0.5 et 3 %,
- 0.5 à 20% $SiO_2$, de préférence entre 5 et 12 %,
- 40 à 90% $Al_2O_3$, de préférence entre 60 et 85 %,
  avec un rapport $ZrO_2/SiO_2$ supérieur ou égal à 2, de préférence égal à 2.
- 0 à 5 % d'oxydes facultatifs ($Na_2O$, CaO, MgO, BaO, ...).

Ces billes peuvent être formées par mise en forme à partir d'une barbotine et/ou d'une pâte d'oxydes céramiques, séchées et frittées à des températures entre 1400 et 1700°C, de préférence entre 1500°C et 1600°C.

Dans la suite de l'exposé, lorsqu'il sera question de $ZrO_2$ (zircone), il faudra considérer qu'il s'agit de la somme de ($ZrO_2$ + $HfO_2$). En effet, une certaine quantité de $HfO_2$, chimiquement inséparable de $ZrO_2$, et ayant des propriétés similaires est toujours présente en plus de $ZrO_2$, ceci est bien connu de l'homme de métier.

L'invention est basée sur la réaction de dissociation à haute température du zircon en présence d'alumine. Cette réaction est également bien connue de l'homme de métier :

$$(3+x)\ .\ Al_2O_3 + 2ZrSiO_4\ (\xrightarrow{\text{haute T°}})\ x\ .\ Al_2O_3 + 3Al_2O_2\ .\ 2SiO_2 + 2ZrO_2$$

Les variations de x permettent d'ajuster les proportions volumiques relatives d'alumine ($Al_2O_3$) (si x≠0), de silicate d'alumine en général et de mullite ($3Al_2O_3.2SiO_2$) et particulier, de zircone ($ZrO_2$) et donc de modifier les propriétés telles que la dureté, la ténacité et la résistance à l'usure, du composite de céramique frittée final.

La réaction à haute température entre le zircon et l'alumine permet d'obtenir par frittage de poudres pulvérulentes des composites très homogènes dont les phases synthétisées sont intimement dispersées.

Dans un mode d'exécution préféré de l'invention, on ajoute au réactif de base de la réaction précédente de l'oxyde d'yttrium ($Y_2O_3$) ce qui permet de stabiliser les formes cristallographiques obtenues à haute température (cubique ou tétragonal) de la zircone.

Le zircone subsiste principalement sous forme tétragonale et parfois cubique en faible teneur. Ces états dépendent des quantités d'$Y_2O_3$ introduites. La forme tétragonale est la plus dense des trois variétés allotropiques de la zircone : densité 6.1g/cc contre 5.9g/cc pour la zircone sous forme cubique et 5.8g/cc pour la zircone sous forme monoclinique.

La forme tétragonale provoque également un effet de renforcement mécanique de la matrice dans laquelle elle se trouve. La quantité totale d'$Y_2O_3$, c'est à dire la partie entrant dans la zircone pour la stabiliser et l'excès entrant dans la constitution de la phase silicate (mullite), conduit à des billes plus denses ayant une résistance plus importante aux forces d'impact élevées et à l'usure.

La stabilisation de la zircone permet également d'améliorer la ténacité du composite et d'augmenter la vitesse de dissociation du zircon et donc de diminuer la température de frittage ou la durée du frittage. Cette diminution de la température de frittage ou de sa durée permet d'aboutir à une microstructure plus fine et bien plus avantageuse pour la résistance à l'usure.

## Description du procédé de l'invention

Le procédé de pelletisation pour l'obtention des billes peut être schématisé de la manière suivante :

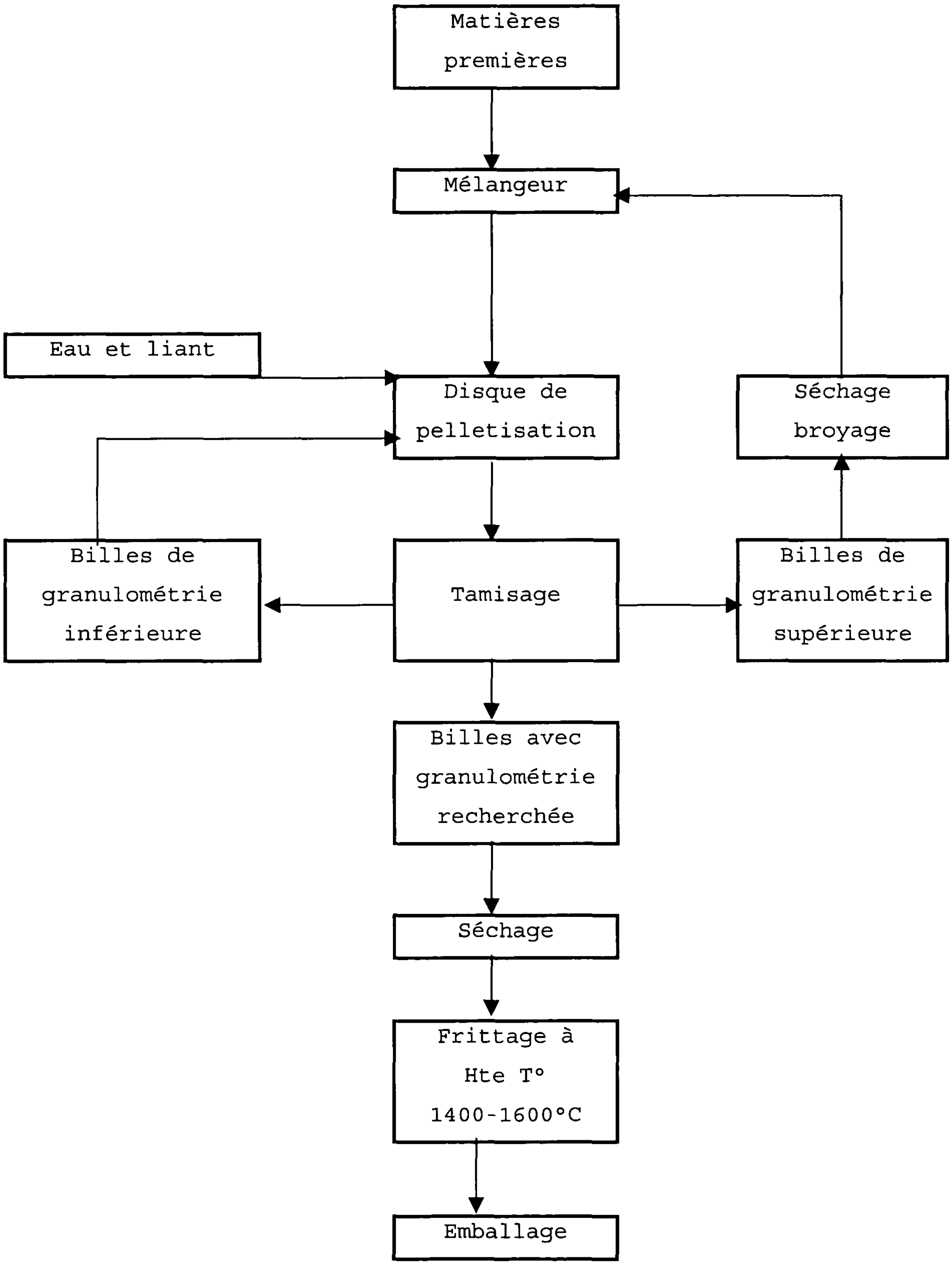


Les ingrédients céramiques secs composant les billes de cette invention sont mélangés intimement dans un malaxeur, on peut éventuellement ajouter une certaine quantité d'eau à ce mélange, par exemple pour obtenir une consistance pâteuse, ou pour former une barbotine.

Les constituants mélangés, particulièrement à sec, peuvent être transformés en sphères au moyen d'un disque rotatif de pelletisation ou disque de granulation. La poudre des ingrédients céramique se transforme en sphère par nébulisation d'eau, additionnée d'un ou plusieurs liants organiques, sur le lit tournant des composants solides. La nébulisation est réglée de façon à ce que les billes sortant du disque de pelletisation contiennent une humidité composée entre 18 et 22% en poids.

Après formation des sphères, celles-ci subissent un tamisage en 3 fractions granulométriques :

a) fraction granulométrique désirée où les billes formées poursuivent le procédé de fabrication jusqu'à leur terme ;
b) fraction granulométrique inférieure à celle désirée où les billes formées retournent sur le disque de pelletisation afin de poursuivre leur croissance ;
c) fraction granulométrique supérieure à celle désirée où les billes formées sont séchées, pulvérisées et renvoyées vers le malaxeur.

La fraction granulométrique désirée (a) est séchée dans une étuve conventionnelle à une température d'environ 110°C jusqu'à ce que les billes aient un taux d'humidité inférieur à 1% en poids.

Les billes séchées sont ensuite chargées dans un four de frittage. Suivant un programme de vitesse de chauffe bien défini, les billes sont frittées à une température entre 1400 à 1600°C.

Après frittage et refroidissement du four, les billes sont conditionnées dans leur emballage et sont prêtes pour l'expédition.

La granulation par sécheur à lit fluidisé est représentée dans le schéma suivant :

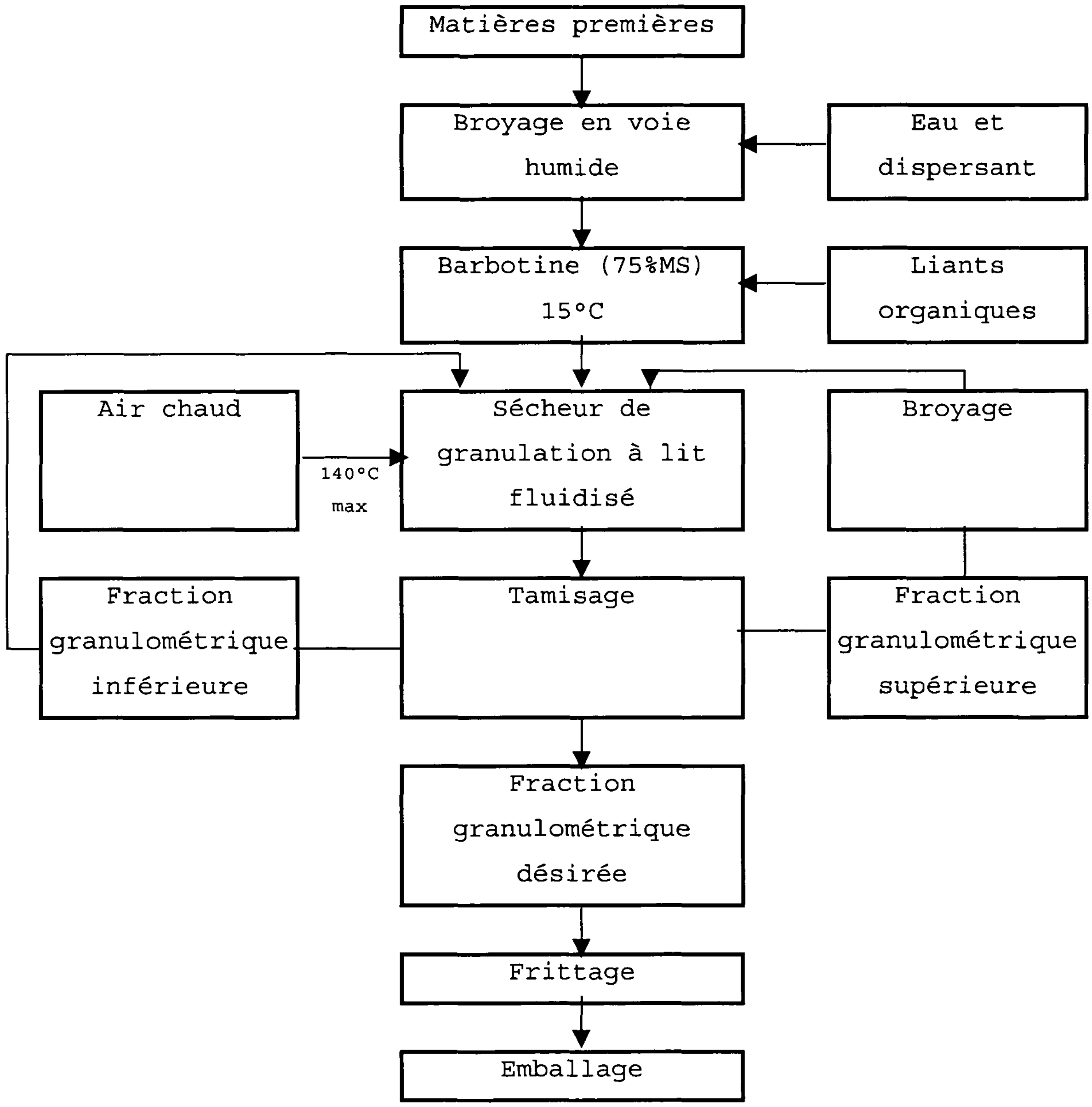


Les ingrédients céramiques composant les billes de cette invention additionnés d'eau et d'un dispersant sont broyés finement dans une proportion de matières sèches allant de 50 à 75%. Après broyage, la barbotine extraite est additionnée de liants organiques (5 à 7%) et mélangée intimement.

A température ambiante, la barbotine est injectée à travers des injecteurs dans un sécheur de granulation à lit fluidisé où elle vient en contact avec les particules solides (germes) fluidisées de même composition que celle de l'invention.

L'air chaud (140°C max.) entrant dans le sécheur évapore l'eau contenue dans la barbotine causant ainsi le dépôt des matières séchées sur les germes. Les dépôts successifs des matières sèches font croître les granules par couche et les transforment en billes. Une fois que les billes atteignent la taille désirée, elles sont enlevées du sécheur.

Après l'extraction du sécheur, les billes subissent un tamisage :

a) les billes de granulométrie inférieure à celle recherchée retournent dans le sécheur pour poursuivre leur croissance dans celui-ci ;
b) les billes de granulométrie supérieure à celle recherchée subissent un broyage et retournent ensuite dans le sécheur pour servir de germes à de futures billes ;
c) les billes de granulométrie recherchée poursuivent le procédé (frittage à haute température, emballage) jusqu'à son terme, comme dans le procédé du point A.

Autres procédés de fabrication

Mise en forme des billes par réaction de gelification :

- Elaboration d'une barbotine, contenant 50 à 75% de matières sèches, à partir des ingrédients céramiques composant les billes de cette invention additionnés d'eau et d'un dispersant.
- Addition à la barbotine d'un polysaccharide naturel : 0.5 à 3% par rapport à la concentration des matières sèches.
- Gélification par coulée, goutte à goutte, de la barbotine à travers un capillaire de différents diamètres dans une solution aqueuse contenant des cations polyvalents. Séparation des billes formées de la solution aqueuse, lavage des billes à l'eau, séchage et frittage à haute température.

Mise en forme des billes par le procédé de moulage par injection (PIM) :

- Elaboration d'une suspension à partir des ingrédients céramiques composant les billes de cette invention additionnés de liants (cires, polymères) et de surfactants (acide carboxylique comme par ex. acide stéarique, acide oléique........
- Chauffage de cette suspension à ± 160°C et injection de celle-ci dans les empreintes des billes contenues dans un moule métallique, préalablement chauffé entre 40 et 60°C.
- Après solidification des billes formées, extraction de celles-ci hors du moule, déliantage des liants suivant un traitement thermique bien défini et frittage des billes à haute température.

Essais de performance en attriteurs de laboratoire et d'industrie

Performance des billes de l'invention (alumine-zircone-mullite) par rapport aux billes de zircone stabilisée ou partiellement stabilisée à l'aide d'oxyde d'Ytrium.

a) Conditions de l'essai

- broyage d'une barbotine avec 60% en poids de matière sèche
- composition de la barbotine : 30% en volume d'alumine et 70% en volume de zircone
- équipement : attriteur Netzsch-LMK4
- vitesse attriteur : 2000 rpm
- dimension des billes : 2 mm de diamètre
- remplissage en billes : 82% du volume utile

b) Résultats

| Paramètres mesurés | Billes de l'invention | Billes en zircone de l'état de la technique |
|---|---|---|
| Temps de broyage | 3h | 3h |
| Energie totale brute | 13.9kWh | 14kWh |
| Produit final | | |
| $d_{90}$ | 2.75µ | 2.80µ |
| $d_{50}$ | 0.80µ | 0.84µ |
| $d_{10}$ | 0.24µ | 0.24µ |
| Usure | 19.6g/kWh | 5.9g/kWh |

c) Commentaires

Pour toutes conditions identiques, les performances de broyage des 2 natures de billes sont équivalentes. Si les performances d'usure sont en faveur des billes en zircone, 3.32 fois mieux, les coûts de ces billes sont ± 10 fois

supérieurs à ceux des billes de l'invention. Ceci rend donc les billes alumine-zircone-mullite très attractives sur le plan économique.

Gain d'usure et en efficacité de broyage des billes de l'invention en comparaison avec des billes en alumine du commerce.

*1) Phase de conditionnement : comparaison de l'usure des billes* sans *l'introduction* de *matière abrasive dans le broyeur*

a) Conditions de l'essai

- alimentation uniquement avec de l'eau
- équipement : attriteur Netzsch - LMK4
- vitesse attriteur : 2000rpm
- dimension des billes : 2mm de diamètre
- remplissage billes : 75% du volume utile
- durée de l'essai : 12h

b) Résultats

| Type | Usure (g/kWh) | X plus d'usure |
|---|---|---|
| Référence 1 | 40,79 | 2,06 |
| Référence 2 | 44,09 | 2,22 |
| Référence 3 | 57,25 | 2,89 |
| Billes de l'invention AMZ | 19,82 | 1 |
| Note : référence 1, référence 2, référence 3 sont des billes d'alumine du commerce provenant de plusieurs sources différentes. | | |

c) Commentaires

Les billes de l'invention en phase de conditionnement sont plus performantes en usure (2 à 2.89 fois) que les billes en alumine. Cet essai met en évidence la très bonne ténacité des billes de l'invention.

*2) Phase d'essai en présence de matière à broyer*

a) Conditions de l'essai

- broyage d'une barbotine alumine avec 65% en poids de matière sèche
- équipement : attriteur Netzsch - LM100
- vitesse attriteur : 400rpm
- dimension des billes : 2mm de diamètre
- remplissage en billes : ± 85% du volume utile

b) Résultats

| Paramètres mesurés | Billes de l'invention | Billes d'alumine |
|---|---|---|
| Temps de broyage | 28h | 36h |
| Granulométrie du produit final : dso | 1.3µ | 1.3µ |

(suite)

| Paramètres mesurés | Billes de l'invention | Billes d'alumine |
|---|---|---|
| Usure | 25.8g/kWh | 35.9g/kWh |

c) Commentaires

Les billes de l'invention sont 1.3 fois plus performantes en temps de broyage. Cette performance est due en partie à la densité plus élevée de ces billes. Les performances d'usure sont de l'ordre de 1.4 fois meilleures que les billes en alumine. Ceci confirme la caractéristique propre de ces billes au niveau de leur ténacité.

**Revendications**

1. Billes de broyage en céramique frittée comprenant un composé de silicate d'alumine ($\alpha Al_2O_3.\beta SiO_2$), de la zircone ($ZrO_2$ + $HfO_2$) et de l'alumine ($Al_2O_3$).

2. Billes de broyage en céramique frittée selon la revendication 1, **caractérisées en ce que** ladite céramique comprend en outre 1 à 5% en poids d'oxydes sélectionnés parmi le groupe des $Na_2O$, MgO, CaO et BaO.

3. Billes de broyage en céramique frittée selon la revendication 1, **caractérisées en ce que** ledit composé de silicate d'alumine comprend la mullite ($3Al_2O_3.2SiO_2$).

4. Billes de broyage en céramique frittée selon la revendication 1, **caractérisées en ce que** ladite céramique comprend en outre un stabilisant sélectionné parmi les oxydes de terres rares.

5. Billes de broyage en céramique frittée réalisées à partir d'un mélange comprenant les ingrédients suivants (en % massique):

   - 5 à 40% $ZrO_2$ + $HfO_2$,
   - 0.1 à 10% $Y_2O_3$,
   - 0.5 à 20% $SiO_2$,
   - 40 à 90% $Al_2O_3$, avec un rapport $ZrO_2/SiO_2$ supérieur ou égal à 2

6. Billes de broyage en céramique frittée réalisées à partir d'un mélange comprenant les ingrédients suivants (en % massique):

   - 10 à 24% $ZrO_2$ + $HfO_2$,
   - 0.5 à 3% $Y_2O_3$,
   - 5 à 12% $SiO_2$,
   - 60 à 85% $Al_2O_3$,

   avec un rapport $ZrO_2/SiO_2$ supérieur ou égal à 2.

7. Billes de broyage en céramique frittée obtenues par un procédé de frittage d'un mélange comprenant les ingrédients suivants (en % massique):

   - 10 à 24% $ZrO_2$ + $HfO_2$,
   - 0.5 à 3% $Y_2O_3$,
   - 5 à 12% $SiO_2$,
   - 60 à 85% $Al_2O_3$,

   avec un rapport $ZrO_2/SiO_2$ égal à 2.

8. Billes de broyage en céramique frittée **caractérisées en ce que** lesdites billes ont un diamètre entre 0.1 et 100mm.

9. Billes de broyage en céramique frittée **caractérisées en ce que** lesdites billes ont un diamètre entre 0.5 et 50mm.

**10.** Billes de broyage en céramique frittée **caractérisées en ce que** lesdites billes ont un diamètre entre 0.5 et 10mm.

**11.** Procédé de fabrication de billes de broyage en céramique frittée comprenant les étapes suivantes :

- mélange et/ou broyage des matières premières en voie sèche et/ou humide pour constituer une barbotine avec ajouts éventuels de liants et/ou de surfactants organiques;
- passage de ladite barbotine par un moyen ou un procédé de granulation;
- sélection par tamisage des billes obtenues avec reconduction des billes de granulométrie inadéquate en amont via une étape de séchage et/ou de broyage éventuelle vers le mélangeur;
- séchage des billes de granulométrie adéquate ;
- frittage des billes de granulométrie adéquate entre 1400°C et 1600°C suivi d'une étape de conditionnement.

**12.** Procédé de fabrication de billes de broyage en céramique frittée selon la revendication 11, **caractérisé en ce que** les moyens de granulation comprennent des granulateurs à lit fluidisé, des disques de granulation,

**13.** Procédé de fabrication de billes de broyage en céramique frittée selon la revendication 11, **caractérisé en ce que** les procédés de granulation comprennent des procédés de gelification ou des procédés de moulage par injection.

**14.** Procédé de fabrication de billes de broyage en céramique frittée selon la revendication 11, **caractérisé en ce que** lesdits liants organiques sont choisis parmi le groupe des polysaccharides, des polymères thermoplastiques, thermodurcissables ou à base de solvants aqueux ou organiques.

**15.** Procédé de fabrication de billes de broyage en céramique frittée selon la revendication 11, **caractérisé en ce que** lesdits surfactants sont choisis parmi le groupe des acides carboxyliques tels que l'acide stéarique ou l'acide oléique et/ou des polyélectrolytes tels que le polymethylacrilate d'ammonium.

**16.** Utilisation des billes de broyage en céramique frittée selon la revendication 1 pour le broyage de matières minérales ou organiques.

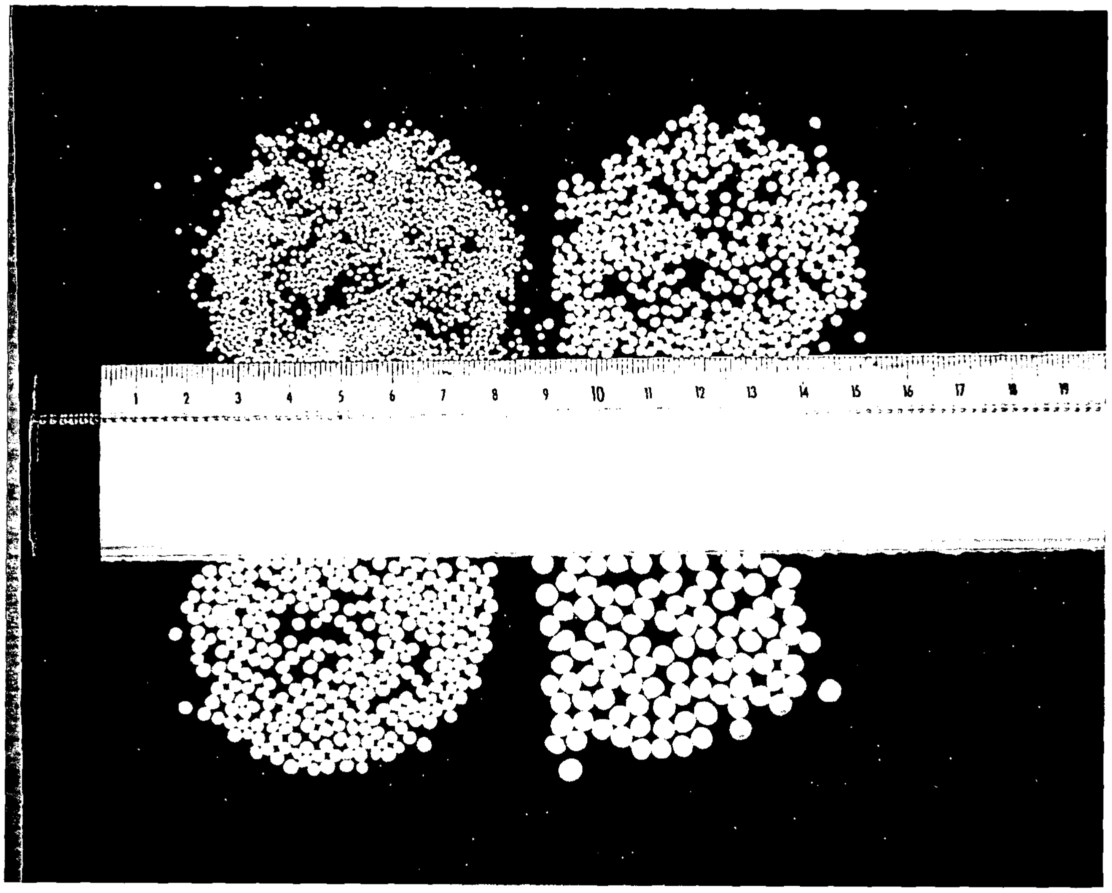


Fig.1

Office européen des brevets

# RAPPORT DE RECHERCHE EUROPEENNE

Numéro de la demande
EP 04 44 7035

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 3 679 383 A (HASS KARL ET AL) 25 juillet 1972 (1972-07-25)<br>* colonne 2, ligne 2 - colonne 2, ligne 25; exemple 1 *<br>* colonne 4, ligne 13 - colonne 4, ligne 19 *<br>----- | 1-7 | C04B35/106<br>B02C15/00 |

| DOMAINES TECHNIQUES RECHERCHES (Int.Cl.7) |
|---|
| C04B<br>B02C |

~~Le présent rapport a été établi pour toutes les revendications~~

| Lieu de la recherche | Date d'achèvement de la recherche | Examinateur |
|---|---|---|
| Munich | 3 mai 2004 | Sala, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

1

EPO FORM 1503 03.82 (P04C02)

Office européen
des brevets

Numéro de la demande
EP 04 44 7035

## REVENDICATIONS DONNANT LIEU AU PAIEMENT DE TAXES

La présente demande de brevet européen comportait lors de son dépôt plus de dix revendications

[X] Une partie seulement des taxes de revendication ayant été acquittée dans les délais prescrits, le présent rapport de recherche européenne a été établi pour les dix premières revendications ainsi que pour celles pour lesquelles les taxes de revendication ont été acquittées, à savoir les revendication(s):

[ ] Aucune taxe de revendication n'ayant été acquittée dans les délais prescrits, le présent rapport de recherche européenne a été établi pour les dix premières revendications.

## ABSENCE D'UNITE D'INVENTION

La division de la recherche estime que la présente demande de brevet européen ne satisfait pas à l'exigence relative à l'unité d'invention et concerne plusieurs inventions ou pluralités d'inventions, à savoir:

voir feuille supplémentaire B

[ ] Toutes les nouvelles taxes de recherche ayant été acquittées dans les délais impartis, le présent rapport de recherche européenne a été établi pour toutes les revendications.

[ ] Comme toutes les recherches portant sur les revendications qui s'y prêtaient ont pu être effectuées sans effort particulier justifiant une taxe additionnelle, la division de la recherche n'a sollicité le paiement d'aucune taxe de cette nature.

[ ] Une partie seulement des nouvelles taxes de recherche ayant été acquittée dans les délais impartis, le présent rapport de recherche européenne a été établi pour les parties qui se rapportent aux inventions pour lesquelles les taxes de recherche ont été acquittées, à savoir les revendications:

[X] Aucune nouvelle taxe de recherche n'ayant été acquittée dans les délais impartis, le présent rapport de recherche européenne a été établi pour les parties de la demande de brevet européen qui se rapportent à l'invention mentionnée en premier lieu dans les revendications, à savoir les revendications:

1-7, 16

Office européen des brevets

# ABSENCE D'UNITÉ D'INVENTION FEUILLE SUPPLÉMENTAIRE B

Numéro de la demande
EP 04 44 7035

La division de la recherche estime que la présente demande de brevet européen ne satisfait pas à l'exigence relative à l'unité d'invention et concerne plusieurs inventions ou pluralités d'inventions, à savoir :

1. revendications: 1-7,16

   Billes de broyage caractérisées par leur composition et leur utilisation.

   ---

2. revendications: 8-10

   Billes de broyage caractérisée par leur diamètre (aucune composition n'est précisée).

   ---

3. revendications: 11-15

   Procédé de fabrication de billes de broyage (sans aucune limitation concernant la composition ou le diamètre).

   ---

EPO FORM P0402

**ANNEXE AU RAPPORT DE RECHERCHE EUROPEENNE RELATIF A LA DEMANDE DE BREVET EUROPEEN NO.** EP 04 44 7035

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements foumis sont donnés à titre indicatif et n'engagent pas la responsabilité de l'Office européen des brevets.

03-05-2004

| Document brevet cité au rapport de recherche | Date de publication | Membre(s) de la famille de brevet(s) | Date de publication |
|---|---|---|---|
| US 3679383 A | 25-07-1972 | BE 720454 A | 17-02-1969 |
| | | CA 933730 A1 | 18-09-1973 |
| | | DE 1646483 A1 | 06-05-1971 |
| | | FR 1581274 A | 12-09-1969 |
| | | GB 1209515 A | 21-10-1970 |
| | | LU 56812 A1 | 17-12-1968 |
| | | NL 6812557 A | 07-03-1969 |

EPO FORM P0460

Pour tout renseignement concernant cette annexe : voir Journal Officiel de l'Office européen des brevets, No.12/82